# EUROPEAN PATENT APPLICATION

(11) **EP 0 771 972 A1**
(43) Date of publication of application: **07.05.1997**
(21) Application number: 95307712.0
(22) Date of filing: 30.10.1995
(51) Int. Cl.: F16H 31/00

(54) **Mechanism converting movement in a regular direction and a reverse direction to movement in one direction**

(71) Applicant: Mishima, Shizuo, Kawasaki-shi, Kanagawa 211 (JP)
(72) Inventor: Mishima, Shizuo, Kawasaki-shi, Kanagawa 211 (JP)
(74) Representative: Bubb, Antony John Allen

(57) **Abstract**

A mechanism for converting movement both in a regular direction and in a reverse direction to movement in one direction comprises a regular/reverse movement member (20A-1, 20B-1) alternately repeating movement in a regular direction and that in a reverse direction, a first mechanism (50A-1) for delivering movement of said regular/reverse movement member in a regular direction, a second mechanism (50B-1,53-1) for delivering movement of the regular/reverse movement member in a reverse direction, and a third mechanism (21-1) for converting both movement delivered to the first mechanism and that delivered to the second mechanism to movement in one direction.

## Description

### BACKGROUND OF THE INVENTION

The present invention relates to a mechanism converting movement in a regular direction and in a reverse direction to movement in one direction.

Conventionally, there has been a mechanism delivering movement only in a regular direction or delivering movement only in a reverse direction from a member alternately repeating movement in a regular direction and in a reverse direction.

However, there has been no mechanism converting movement of the member as described above both in a regular direction and in a reverse direction to movement in one direction and delivering the movement.

### SUMMARY OF THE INVENTION

It is an object of the present invention to provide a mechanism for converting a movement of a member alternately repeating movement both in a regular direction and in a reverse direction to movement in one direction and delivering the movement.

A main point of the present invention is a mechanism converting the movement of a member alternately repeating movement both in a regular direction and in a reverse irection to a movement in one direction comprising a regular/reverse movement member alternately repeating movement both in a regular direction and in a reverse direction, a first mechanism delivering movement of the regular/reverse movement member in a regular direction, a second mechanism delivering movement of the regular/reverse movement member in a reverse direction, and a third mechanism converting both movement delivered to the first mechanism and that delivered to the second mechanism to movement in one direction.

BRIEF DESCRIPTION OF THE DRAWINGS
Fig. 1 is a cross-sectional view showing a mechanism converting movement of a member alternately repeating movement both in a regular direction and in a reverse direction to movement in one direction according to Embodiment 1 of the present invention;
Fig. 2 is a side view (a view from the direction as indicated by the arrow A shown in Fig. 1) showing a mechanism converting movement of the member alternately repeating movement both in a regular direction and in a reverse direction to movement in one direction according to Embodiment 1 of the present invention;
Fig. 3 is a cross-sectional view showing Embodiment 2 of the present invention;
Fig. 4 is a cross-sectional view showing Embodiment 3 of the present invention;
Fig. 5 is a cross-sectional view showing Embodiment 4 of the present invention;
Fig. 6 is a cross-sectional view showing Embodiment 5 of the present invention;
Fig. 7 is a cross-sectional view showing Embodiment 6 of the present invention;
Fig. 8 is a general cross-sectional view showing Embodiment 7 of the present invention;
Fig. 9 is a view showing Embodiment 8 of the present invention;
Fig. 10 is a view showing Embodiment 9 of the present invention; and
Fig. 11 is a general view showing an example of a back stop mechanism 50A-1.

### DESCRIPTION OF THE PREFERRED EMBODIMENT

Detailed description is made hereinafter for embodiments of the present invention with reference to the related drawings.

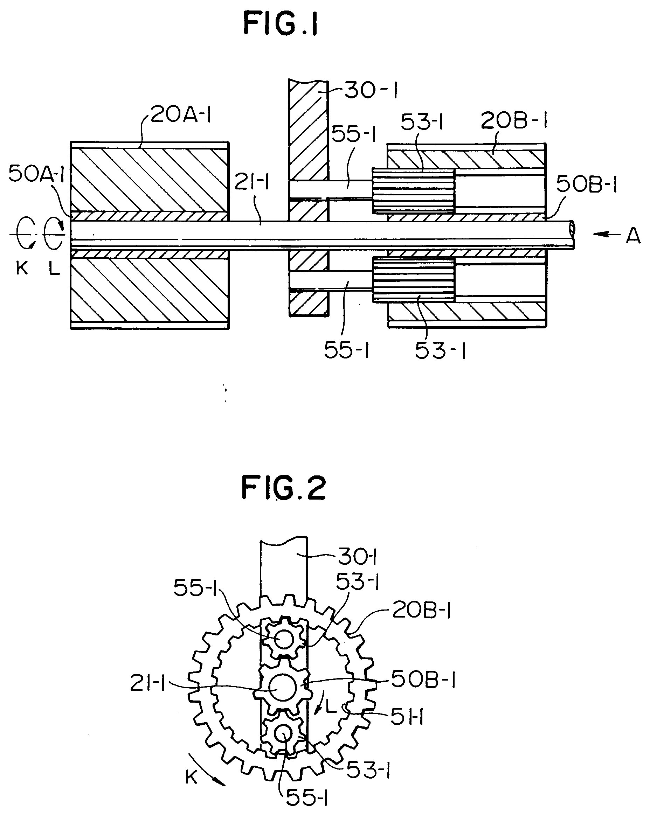

Fig. 1 and Fig. 2 are views each showing a mechanism converting movement of a member alternately repeating movement both in a regular direction and in a reverse direction to movement in one direction according to Embodiment 1 of the present invention, and Fig. 1 is a cross-sectional view thereof, while Fig. 2 is a side view thereof ( a view from the direction indicated by arrow A shown in Fig. 1).

The mechanism as shown in Fig. 1 and Fig. 2 is one in which two external tooth gears 20A-1 and 20B-1 each are attached to one shaft 21-1 through back stop mechanisms 50A-1 and 50B-1.

The two external tooth gears 20A-1 and 20B-1 each engage another one unit of gear not shown herein, and the gears are driven so that rotary movement in a regular direction and in a reverse direction is repeatedly executed by another one gear described above. Namely when the external tooth gear 20A-1 rotates in a regular direction, the external tooth gear 20B-1 also simultaneously rotates in a regular direction, and when the external tooth gear 20A-1 rotates in a reverse direction, the external tooth gear 20B-1 also simultaneously rotates in a reverse direction.

The back stop mechanism 50A-1(50B-1) is a mechanism idling for rotation in a regular direction (a free side), but delivering torque without idling for rotation in a reverse direction (a back stop side).

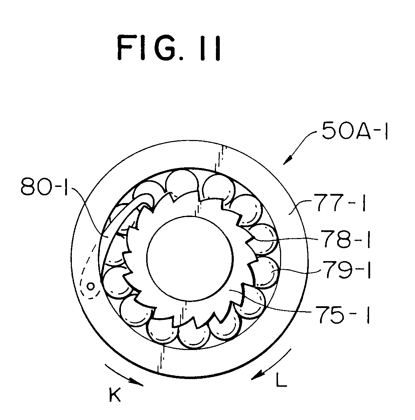

Fig. 11 is a general view showing one of examples of this back stop mechanism 50A-1(50B-1).As shown in the figure, this back stop mechanism comprises two ring members 75-1 and 77-1 and a plurality of balls 79-1 inserted into between the two ring members 75-1 and 77-1 and constitutes what is called a ball bearing thereby. Also a plurality of gear teeth 78-1 are provided at specified positions on the peripheral surface of the internal ring member 75-1. A claw 80-1 engaging one of the gear teeth 78-1 is provided on the external ring member 77-1.

When the ring member 77-1 rotates in the direction indicated arrow K in relation to the ring member 75-1, one of the teeth 78-1 and the claw 80-1 are engaged with each other and the rotary movement generated thereby can be delivered from the ring member 77-1 to the ring member 75-1.

On the other hand, when the ring member 77-1 rotates in the direction indicated by arrow L in relation to the ring member 75-1, the tooth 78-1 and the claw 80-1 are not engaged with each other, which makes the ring member 77-1 idle against the ring member 75-1. For this reason, the rotary movement can not be delivered between the ring member 77-1 and the ring member 75-1.

It should be noted that there are various types of back stop mechanism other than that described above. Therefore, a back stop mechanism having other construction may be used in this embodiment.

Also it should be noted that the back stop mechanisms 50A-1 and 50B-1 according to the embodiment shown in Fig. 1 each deliver rotary movement to the shaft so that the shaft 21-1 rotates in the direction indicated by arrow K respectively.

The shaft 21-1 is rotatably born by a bearing means 30-1.

Inside one of the external tooth gears 20B-1 is hollow, and an internal tooth gear 51-1 is provided therein, and two small gears 53-1 and 53-1 each provided in the upper side and the lower side therein engage the internal tooth gear 51-1 respectively.

Shafts 55-1 and 55-1 of these two small gears 53-1 and 53-1 are rotatably attached to the bearing means 30-1 respectively. And also the two small gears 53-1 and 53-1 each engage a gear provided on the peripheral of the back stop mechanism 50B-1.

When the two external tooth gears 20A-1 and 20B-1 each rotate in the direction indicated by arrow K, rotary movement in the direction indicated by arrow K is delivered to the shaft 21-1 through the external tooth gear 20A-1 and the back stop mechanism 50A-1.

In this case, the external tooth gear 20B-1 also rotates in the direction indicated by arrow K, but as shown in Fig. 2, torque in the reverse direction (in the direction of the arrow L) is delivered to the back stop mechanism 50B-1 due to linkage thereof with the small gears 53-1 and 53-1, so that the back stop mechanism 50B-1 idles against the shaft 21-1, and the rotary movement is not delivered thereto.

On the other hand, when the two external tool gears 20A-1 and 20B-1 rotate in the direction indicated by arrow L, the back stop mechanism 50A-1 attached to the external tooth gear 20A-1 idles, and the rotary movement is not delivered thereto. But the rotary movement of the external tooth gear 20B-1 in the direction indicated by arrow L is converted to movement in the reverse direction, namely in the direction indicated by arrow K according to the small gears 53-1 and 53-1,so that torque in the direction indicated by arrow K is delivered to the shaft 21-1 through the back stop mechanism 50B-1.

Namely even if the two external tooth gears 20A-1 and 20B-1 are driven so that the gears repeatedly move in the K direction and in the direction indicated by arrow L ("a regular direction" and "a reverse direction" as described in Claim 1) according to another one gear not shown herein, the shaft 21-1 is always rotatably driven only in the direction indicated by arrow K.

Herein, the two external tooth gears 20A-1 and 20B-1 are equivalent to "a regular/reverse movement member" according to Claim 1, one of the back stop mechanisms (50A-1) is equivalent to "a first mechanism" according to Claim 1, the other back stop mechanisms (50B-1) and the small gears 53-1 and 53-1 are equivalent to "a second mechanism" according to Claim 1, and the shaft 21-1 is equivalent to "a third mechanism" according to Claim 1.

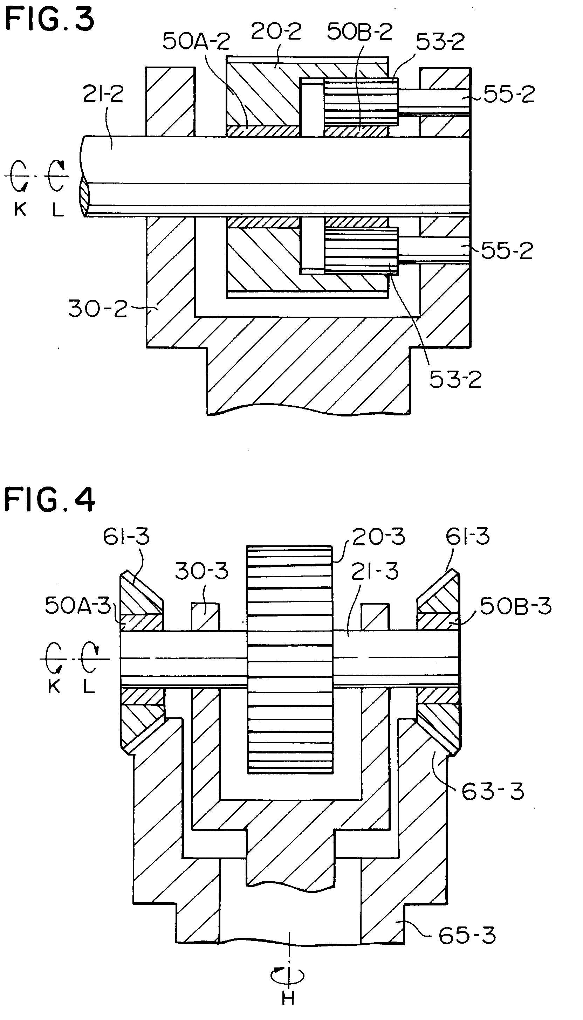

Fig. 3 is a cross-sectional view showing Embodiment 2 of the present invention.

In this embodiment, an external tooth gear 20-2 alternately repeating rotary movement both in a regular direction and in a reverse direction comprises one unit.

Provided in the external tooth gear 20-2 are back stop mechanisms 50A-2 and 50B-2 allocated in the right side and in the left side thereof respectively. The back stop mechanisms 50A-2 is directly attached to the shaft 21-2. The other back stop mechanisms 50B-2 has a gear provided on the peripheral surface thereof, the gear engaging with small gears 53-2 and 53-2.

The small gears 53-2 and 53-2 are engaged with an internal tooth gear provided at the internal peripheral surface of the external tooth gear 20-2. Furthermore the shafts 55-2 and 55-2 of the small gears 53-2 and 53-2 each are rotatably attached to the bearing means 30-2.

Both of the back stop mechanisms 50A-2 and 50B-2 described above are constructed so that the torque is delivered to the shaft 21-2 only when the back stop mechanisms 50A-2 and 50B-2 are rotated in the direction indicated by arrow K.

When the external tooth gear 20-2 rotates in the direction indicated by arrow K, one of the back stop mechanism 50A-2 is locked and the rotary movement is delivered to the shaft 21-2. When the external tooth gear 20-2 rotates in the direction indicated by arrow L, the back stop mechanism 50A-2 idles. On the other hand, rotary movement of the external tooth gear 20-2 is converted to the reverse direction by the small gears 53-2 and 53-2, and the other one of the back stop mechanism 50B-2 is locked and the rotary movement is delivered to the shaft 21-2.

Herein, the external tooth gear 20-2 is equivalent to "a regular/reverse movement member" according to Claim 1, the back stop mechanism 50A-2 is equivalent to "a first mechanism" according to Claim 1, the other back stop mechanism 50B-2 and the small gears 53-2 and 53-2 are equivalent to "a second mechanism" according to Claim 1, and the shaft 21-2 is equivalent to "a third mechanism" according to Claim 1.

Fig. 4 is a cross-sectional view showing Embodiment 3 of the present invention.

In this embodiment, one unit of external tooth gear 20-3 alternately repeating movement both moving in a regular direction and in a reverse direction is fixed to a shaft 21-3, and the shaft 21-3 is rotatably born by a bearing means 30-3.

Also bevel gears 61-3 and 61-3 are attached to both edges of the shaft 21-3 through back stop mechanisms 50A-3 and 50B-3 respectively. A bevel gear 63-3 engages the both bevel gears 61-3 and 61-3. A shaft 65-3 is monolithically attached to the bevel gear 63-3.

Herein, one of the back stop mechanisms 50A-3 is attached to the shaft 21-3 so that, only when the shaft 21-3 rotates in the direction indicated by arrow K, the driving force is delivered to the bevel gear 61-3. The other back stop mechanism 50B-3 is attached to the shaft 21-3 so that, only when the shaft 21-3 rotates in the direction indicated by arrow L, the driving force is delivered to the bevel gear 61-3.

When the external tooth gear 20-3 rotates in the direction indicated by arrow K, the rotary movement is delivered to the bevel gear 61-3 engaging one of the back stop mechanisms 50A-3, and with this delivery the output shaft 65-3 rotates in the direction indicated by arrow H.

When the external tooth gear 20-3 rotates in the direction indicated by arrow L, the rotary movement is delivered to the bevel gear 61-3 engaging the other back stop mechanism 50B-3, and with this delivery the output shaft 65-3 rotates, but the rotary direction thereof is also the direction indicated by arrow H.

Namely in a case of this embodiment also, an output from the external tooth gear 20-3 alternately repeating movement both in the regular direction and in the reverse direction can be converted to rotary movement in one direction.

It should be noted that, in this case, the external tooth gear 20-3 and the shaft 21-3 are equivalent to "a regular/reverse movement member", one of the back stop mechanisms 50A-3 is equivalent to "a first mechanism" according to Claim 1, the other back stop mechanism 50B-3 is equivalent to "a second mechanism", and three bevel gears 61-3,61-3, and 63-3 are equivalent to "a third mechanism" according to Claim 1.

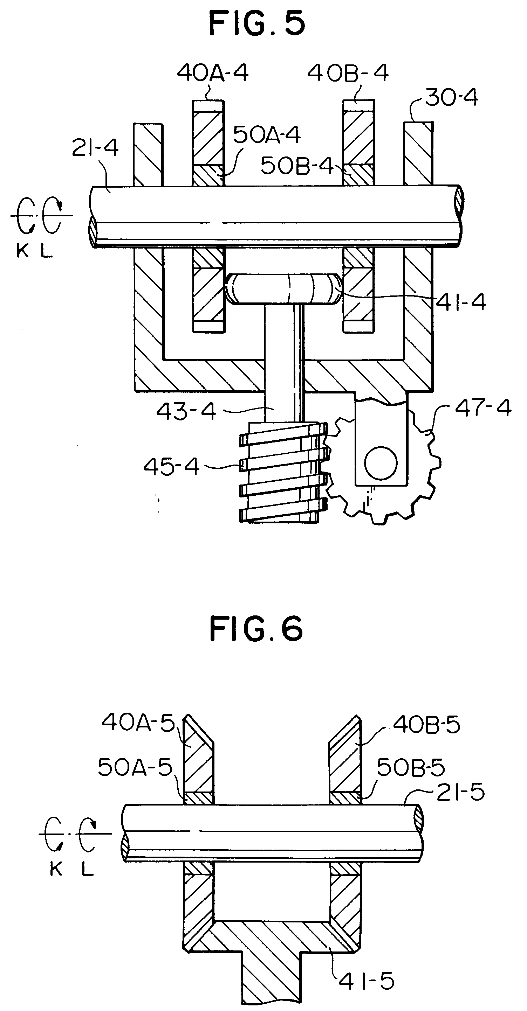

Fig. 5 is a cross-sectional view showing Embodiment 4 of the present invention. In a case of this embodiment, a shaft 21-4 is "a regular/reverse movement member" repeatedly rotating in a regular direction and in a reverse direction.

This shaft 21-4 is rotatably born by a bearing means 30-4. Also disks 40A-4 and 40B-4 are attached to this shaft 21-4 through two back stop mechanisms 50A-4 and 50B-4.

The two back stop mechanisms 50A-4 and 50B-4 are attached so that, when the shaft 21-4 is rotated in one direction, the back stop mechanism 50A-4 is locked, and when the shaft is rotated in the other direction, then the back stop mechanism 50B-4 is locked.

The both disks 40A-4 and 40B-4 hold a disk 41-4 therebetween. Rotary movement of the both disks 40A-4 and 40B-4 are delivered to the disk 41-4 through their friction.

A shaft 43-4 is attached to the disk 41-3. A worm gear 45-4 is attached to one edge of the shaft 43-4. A worm wheel 47-4 engages the worm gear 45-4.

If the shaft 21-4 is rotated in the direction indicated by arrow K, the rotary movement is delivered from the back stop mechanism 50A-4 to the disk 40A-4, and furthermore the rotary movement described above is delivered from the disk 40A-4 to the worm wheel 47-4 through the disk 41-4, shaft 43-4, and worm gear 45-4.

If the shaft 21-4 is rotated in the direction indicated by arrow L, the rotary movement is delivered from the back stop mechanism 50B-4 to the disk 40B-4, and furthermore the rotary movement is delivered from the disk 40B-4 to the worm wheel 47-4 through the disk 41-4, shaft 43-4, and worm gear 45-4.

Even if the shaft is rotated in either one of the directions, the worm wheel 47-4 rotates in the same direction.

In a case of this embodiment, the worm gear 45-4 and worm wheel 47-4 are used, so that rotary movement can be delivered from the worm gear 45-4 to the worm wheel 47-4, but rotary movement is not delivered from the worm wheel 47-4 to the worm gear 45-4. Namely it means what is called a self-lock mechanism.

It should be noted that in a case of this embodiment, the shaft 21-4 is equivalent to "a regular/reverse movement member" according to Claim 1, one of the back stop mechanisms 50A-4 is equivalent to "a first mechanism" according to Claim 1, the other back stop mechanism 50B-4 is equivalent to "a second mechanism" according to Claim 1, and the three disks 40A-4, 40B-4, and 41-4 are equivalent to "a third mechanism" according to Claim 1.

In the embodiment described above, a self lock mechanism is provided outside the mechanism according to the present invention, but the self lock mechanism may be provided at any position inside of the mechanism according to the present invention.

Fig. 6 is a cross-sectional view showing Embodiment 5 according to the present invention. In a case of this embodiment, a shaft 21-5 is "a regular/reverse movement member" alternately repeating movement in the regular direction and in the reverse direction.

Bevel gears 40A-5 and 40B-5 are attached to this shaft 21-5 through two back stop mechanisms 50A-5 and 50B-5.

One unit of bevel gear 41-5 engages the both bevel gears 40A-5 and 40B-5.

The two back stop mechanisms 50A-5 and 50B-5 each are attached so that, when the shaft 21-5 is rotated in the direction indicated by arrow K, the back stop mechanism 50A-5 is locked, and when the shaft 21-5 is rotated in the direction indicated by arrow L, the back stop mechanism 50B-5 is locked.

If the shaft 21-5 is rotated in the direction indicated by arrow K, the rotary movement is delivered to the bevel gear 41-5 through the back stop mechanism 50A-5 and the bevel gear 40A-5.

If the shaft 21-5 is rotated in the direction indicated by arrow L, the rotary movement is delivered to the bevel gear 41-5 through the back stop mechanism 50B-5 and the bevel gear 40B-5. The rotary direction of the bevel gear 41-5 is always kept in one direction.

In a case of this embodiment, the shaft 21-5 is equivalent to "a regular/reverse movement member" according to Claim 1, one of the back stop mechanisms 50A-5 is equivalent to "a first mechanism" according to Claim 1, the other back stop mechanism 50B-5 is equivalent to "a second mechanism" according to Claim 1, and the three bevel gears 40A-5, 40B-5, and 41-5 are equivalent to "a third mechanism" according to Claim 1.

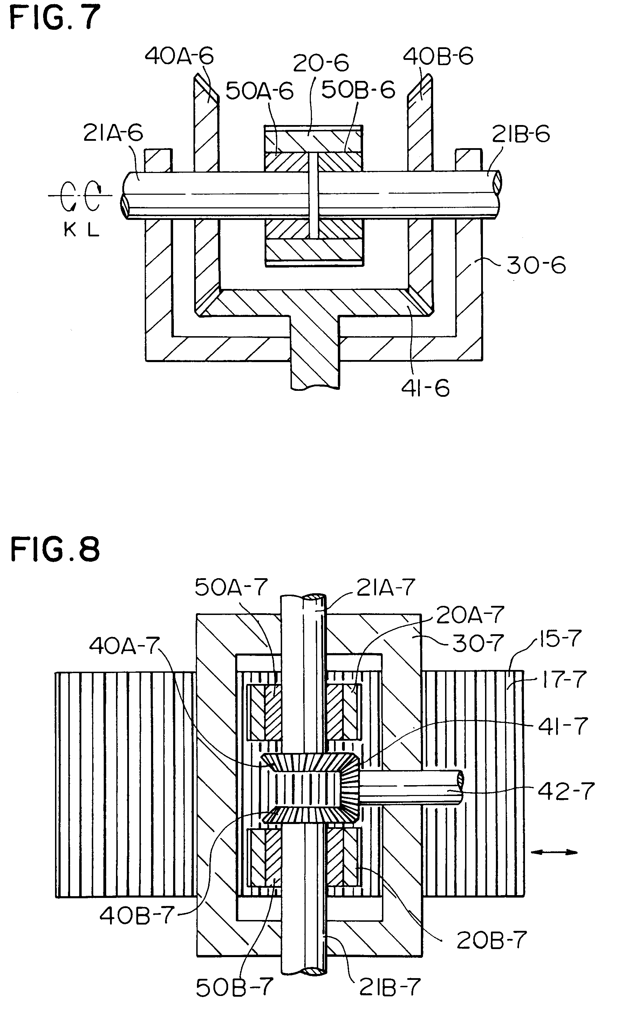

Fig. 7 is a cross-sectional view showing Embodiment 6 of the present invention. In this embodiment an external tooth gear 20-6 alternately repeats rotary movement in a regular direction and in a reverse direction. The external tooth gear 20-6 is connected at a center thereof to shafts 21A-6 and 21B-6 each through two back stop mechanisms 50A-6 and 50B-6 respectively.

The back stop mechanism 50A-6 is attached so that, when the shaft 21A-6 is rotated in the direction of the arrow K, the back stop mechanism 50A-6 is locked, and the back stop mechanism 50B-6 is attached so that, when the shaft 21B-6 is rotated in the direction of the arrow L, the back stop mechanism 50B-6 is locked.

Bevel gears 40A-6 and 40B-6 each are fixed to the two shafts 21A-6 and 21B-6 respectively. Also the two shafts 21A-6 and 21B-6 are rotatably born by bearing means 30-6 respectively.

The two bevel gears 40A-6 and 40B-6 each engage one unit of bevel gear 41-6.

When the external tooth gear 20-6 is rotated in the direction indicated by arrow K, the rotary movement is delivered to the shaft 21A-6 through one of the back stop mechanisms 50A-6, and the bevel gear 41-6 rotates through the bevel gear 40A-6.

When the external tooth gear 20-6 is rotated in the direction indicated by arrow L, the rotative movement is delivered to the shaft 21B-6 through the other back stop mechanism 50B-6, and the bevel gear 41-6 rotates through the bevel gear 40B-6. The rotary direction of the bevel gear 41-6 is always kept in one direction.

In a case of this embodiment, the external tooth gear 20-6 is equivalent to "a regular/reverse movement member" according to Claim 1, one of the back stop mechanisms 50A-6 is equivalent to "a first mechanism" according to Claim 1, the other back stop mechanism 50B-6 is equivalent to "a second mechanism" according to Claim 1, and the two shafts 21A-6 and 21B-6 and the three bevel gears 40A-6, 40B-6, and 41-6 are equivalent to "a third mechanism" according to Claim 1.

Fig. 8 is a general cross-sectional view showing Embodiment 7 of the present invention. In the mechanism according to this embodiment, bevel gears 40A-7 and 40B-7 are attached to the ends of two shafts 21A-7 and 21B-7 respectively, the both bevel gears 40A-7 and 40B-7 are engaged with one unit of bevel gear 41-7.

External tooth gears 20A-7 and 20B-7 are attached to the bevel gears 40A-7 and 40B-7 through back stop mechanisms 50A-7 and 50B-7 respectively.

Each direction in which the two back stop mechanisms 50A-7 and 50B-7 are locked respectively is set to a reverse direction to each other.

The two shafts 21A-7 and 21B-7, and the shaft 42-7 of the bevel gear 41-7 are each rotatably born by a bearing means 30-7.

The two external tooth gears 20A-7 and 20B-7 engage rack teeth 17-7 provided on the surface of a slide means 15-7.

The slide means 15-7 comprises a plurality of rack teeth 17-7 in parallel to each other provided on the surface of a plate therein, and is repeatedly moved from side to side by a driving means not shown herein.

When the sliding means 15-7 moves from side to side, the two external tooth gears 20A-7 and 20B-7 repeats rotary movement both in the regular direction and in the reverse direction according to the movement described above.

In this case, either one of the two back stop mechanisms 50A-7 and 50B-7 is locked and the other one idles corresponding to the rotary direction of the two external tooth gears 20A-7 and 20B-7. Therefore torque in one direction is always delivered to the bevel gear 41-7. And for this reason, the shaft 42-7 always rotates in one direction.

In a case of this embodiment, the two external tooth gears 20A-7 and 20B-7 are equivalent to "a regular/reverse movement member" according to Claim 1, one of the back stop mechanisms 50A-7 is equivalent to "a first mechanism" according to Claim 1, the other back stop mechanism 50B-7 is equivalent to "a second mechanism" according to Claim 1, and the three bevel gears 40A-7, 40B-7, and 41-7 are equivalent to "a third mechanism" according to Claim 1.

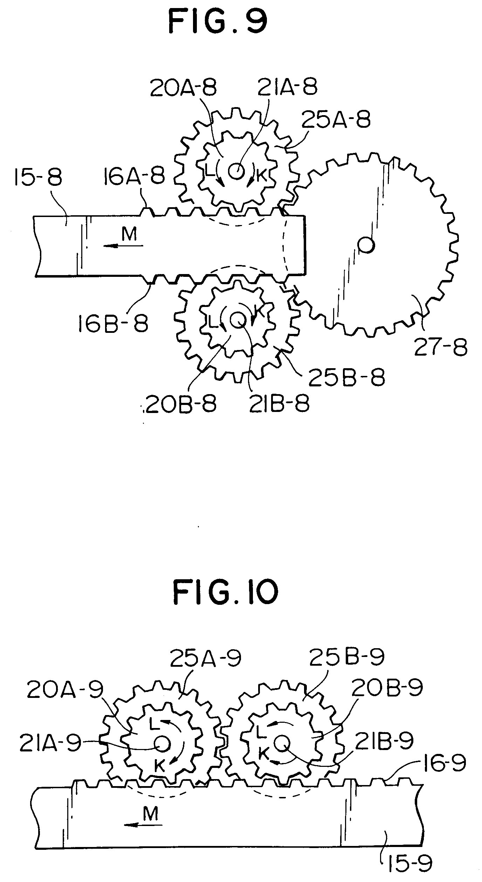

Fig. 9 is a cross-sectional view showing Embodiment 8 of the present invention. A mechanism according to this embodiment comprises a slide member 15-8, two external tooth gears 20A-8 and 20B-8, two shafts 21A-8 and 21B-8, two external tooth gears 25A-8 and 25B-8, and an external tooth gear 27-8.

The slide member 15-8 is a plate and gear teeth 16A-8 and 16B-8 each are provided in the both side thereof.

Gear teeth provided on the peripheral surface of the two external tooth gear 20A-8 and 20B-8 are each engaged with the gear teeth 16A-8 and 16B-8 of the slide member 15-8 respectively. The two external tooth gears 20A-8 and 20B-8,are fixed to the two shafts 21A-8 and 21B-8 respectively.

The two external tooth gears 25A-8 and 25B-8 are attached to the two shaft 21A-8 and 21B-8 respectively through back stop mechanisms (not shown herein). The two back stop mechanisms are each attached thereto so that, when both of the shafts 21A-8 and 21B-8 rotate in the direction indicated by arrow K, the rotary movement is delivered to the external tooth gears 25A-8 and 25B-8.

When the slide member 15-8 is slid in the direction indicated by arrow M, the two external tooth gears 20A-8 and 20B-8 each rotate in the direction indicated by arrow K and in the direction indicated by arrow L respectively. For this reason, the rotary movement of the external tooth gear 20A-8 is delivered to the external tooth gear 25A-8, and furthermore to the external tooth gear 27-8.

When the slide member 15-8 is slid in the reverse direction, the two external tooth gears 20A-8 and 20B-8 rotate in the different direction from the rotary direction described above respectively. For this reason, the rotary movement of the external tooth gear 20B-8 is delivered to the external tooth gear 25B-8, and furthermore to the external tooth gear 27-8.

In a case of this embodiment, the two external tooth gears 20A-8 and 20B-8 are equivalent to "a regular/ reverse movement member" according to Claim 1, the two back stop mechanisms are each equivalent to "a first mechanism" and "a second mechanism" according to Claim 1 respectively, and the three external tooth gears 25A-8, 25B-8, and 27-8 are equivalent to "a third mechanism" according to Claim 1.

Fig. 10 is a cross-sectional view showing Embodiment 9 according to the present invention. A mechanism according to this embodiment comprises a slide member 15-9, two external tooth gears 20A-9 and 20B-9, two shafts 21A-9 and 21B-9, and two external tooth gears 25A-9 and 25B-9.

This embodiment is different from the Embodiment 8 described above in some points, namely, that the two external tooth gears 20A-9 and 20B-9 are engaged with gear teeth 16-9 provided on one side of the slide member 15-9, that the two external tooth gears 25A-9 and 25B-9 are engaged with each other, and that a rotary direction in which the back stop mechanism of the side of shaft 21A-9 is locked is set to a direction indicated by arrow K and a rotary direction in which the back stop mechanism on the side of shaft 21B-9 is locked is set to a direction indicated by arrow L.

When the slide member 15-9 slides in the direction indicated by arrow M, both of the two external tooth gears 20A-9 and 20B-9 rotate in the direction indicated by arrow K. For this reason the rotary movement of one of the external tooth gear 20A-9 in the direction indicated by arrow K is delivered to the external tooth gear 25A-9. In this case, the external tooth gear 25B-9 engaging the external tooth gear 25A-9 also idles and is rotated in the reverse direction ( in the direction indicated by arrow L) to that of the external tooth gear 25A-9 by the external tooth gear 25A-9.

When the slide member 15-9 slides in the direction reverse to that indicated by arrow M, both of the two external tooth gears 20A-9 and 20B-9 rotate in the different direction from the rotary direction described above respectively. For this reason the rotary movement of the other external tooth gear 20B-9 in the direction indicated by arrow L is delivered to the external tooth gear 25B-9. In this case, the external tooth gear 25A-9 engaging the external tooth gear 25B-9 also idles and is rotated in the direction (in the direction of the arrow K) reverse to that of the external tooth gear 25B-9 by the external tooth gear 25B-9.

Namely a rotary direction of the external tooth gear 25A-9 is always the direction indicated by arrow K, and a rotary direction of the external tooth gear 25B-9 is always the direction indicated by arrow L.

In a case of this embodiment, the two external tooth gears 20A-9 and 20B-9, and the shafts 21A-9 and 21B-9 are equivalent to "a regular/ reverse movement member" according to Claim 1, the two back stop mechanisms each are equivalent to "a first mechanism" and "a second mechanism" according to Claim 1 respectively, and the external tooth gears 25A-9 or external tooth gear 25B-9 is equivalent to "a third mechanism" according to Claim 1.

It should be noted that a fly wheel, or a stepless speed change mechanism, or a driving mechanism, or a reciprocal movement mechanism, or a power generator may be attached to an input side, or an output side, or inside of the mechanisms shown in Embodiment 1 to Embodiment 9.

The present invention can be carried out in various ways other than the embodiments described above without departing from the concept and the main characteristics thereof. For this reason, the embodiments described above are provided only as examples, and are not intended to limit a scope of the present invention. The scope of the present invention is defined by the Claims provided hereinafter, and is not limited in any means by the specification. And furthermore, any modification or change belonging to a scope equivalent to the Claims is strictly regarded as those within the scope of the present invention.

## Claims

1. A mechanism converting movement in a regular direction as well as in a reverse direction to movement in one direction comprising:
a regular/reverse movement member repeatedly moving in a regular direction and in a reverse direction;
a first mechanism delivering movement in a regular direction of said regular/reverse movement member;
a second mechanism delivering movement in a reverse direction of said regular/reverse movement member; and
a third mechanism converting both movement delivered through said first mechanism and that delivered through said second mechanism to movement in the same direction.

2. The mechanism for converting movement in a regular direction and that in a reverse direction to movement in one direction according to Claim 1, wherein said first mechanism comprises a back stop mechanism which delivers either movement of said regular/reverse movement member in a regular direction or that in a reverse direction, said second movement also comprises a back stop mechanism which delivers either movement of said regular/reverse movement member in a regular direction or that in a reverse direction, and with this configuration the first mechanism delivers only movement in a regular direction and the second mechanism delivers only movement in a reverse direction.

3. The mechanism for converting movement in a regular direction and that in a reverse direction to movement in one direction according to Claim 1 or Claim 2, wherein a flywheel, or a self-lock mechanism, or a stepless speed change mechanism, or a driving mechanism, or a reciprocal movement mechanism, or a power generator is attached thereto.
